Europäisches Patentamt

European Patent Office

Office européen des brevets

(11) Veröffentlichungsnummer : **0 270 556 B1**

(12) **EUROPÄISCHE PATENTSCHRIFT**

(45) Veröffentlichungstag der Patentschrift :
**05.06.91 Patentblatt 91/23**

(51) Int. Cl.$^5$ : **A61C 3/06**, B24D 5/16

(21) Anmeldenummer : **87902357.0**

(22) Anmeldetag : **07.04.87**

(86) Internationale Anmeldenummer :
**PCT/CH87/00039**

(87) Internationale Veröffentlichungsnummer :
**WO 88/00029 14.01.88 Gazette 88/02**

(54) **VORRICHTUNG MIT SPINDEL UND SCHLEIFSCHEIBE, INSBESONDERE FÜR ZAHNÄRZTE SOWIE VERFAHREN ZUM HERSTELLEN DERSELBEN.**

(30) Priorität : **26.06.86 CH 2592/86**

(43) Veröffentlichungstag der Anmeldung :
**15.06.88 Patentblatt 88/24**

(45) Bekanntmachung des Hinweises auf die Patenterteilung :
**05.06.91 Patentblatt 91/23**

(84) Benannte Vertragsstaaten :
**AT BE CH DE FR GB IT LI LU NL SE**

(56) Entgegenhaltungen :
**EP-A- 0 044 701
DE-A- 1 949 505
DE-A- 3 305 644**

(73) Patentinhaber : **Hawe-Neos Dental Dr. H. von Weissenfluh S.A.
CH-6925 Gentilino (CH)**

(72) Erfinder : **VON WEISSENFLUH, Beat
Casa Zarament
CH-6925 Gentilino (CH)**

(74) Vertreter : **Troesch, Jacques J., Dr. sc. nat. et al
Troesch Scheidegger Werner AG
Siewerdtstrasse 95
CH-8050 Zürich (CH)**

## Beschreibung

Die vorliegende Erfindung betrifft eine Vorrichtung mit Spindel und Schleifscheibe, insbesondere für Zahnärzte sowie ein Verfahren zum Herstellen der Schleifscheibe der Vorrichtung.

Derartige Vorrichtungen für Zahnärzte sind beispielsweise in der Europäischen Patentanmeldung No. 0 044 701 vom 27. Januar 1982 bekannt geworden.

Sie weisen den Nachteil auf, dass sie nicht ein maximales Eindringen des Umfangsbereiches der Schleifscheibe in Zwischenräume zwischen den Zähnen erlauben, da das freie Ende der Antriebsspindel über die Schleifscheibe vorsteht und damit ein Hindernis bildet.

Auch kann die vorstehende Spindel während ihrer Rotation die Oberfläche des Zahnes beschädigen oder verfärben, im besonderen wenn es sich um Kunststoff handelt, wie dieser beispielsweise auch zum Plombieren der Zähne benützt wird.

Die Vorrichtung gemäss der vorliegenden Erfindung verhütet solche Nachteile und ist gekennzeichnet gemäss dem kennzeichnenden Teil des Anspruches 1.

Die Erfindung wird anschliessend beispielsweise anhand einer Zeichnung erläutert.

Es zeigen :

Fig. 1 eine Aufsicht auf eine Schleifscheibe mit ihrer Nabe,

Fig. 2 einen Querschnitt durch die Schleifscheibe gemäss Schnittlinie II-II der Fig, 1,

Fig. 3 einen Querschnitt gemäss Schnittlinie III-III der Fig. 1,

Fig. 4A eine Seitenansicht, teilweise im Schnitt der Vorrichtung mit der Antriebsspindel und der montierten Schleifscheibe,

Fig. 4B einen Querschnitt des freien Endes der Spindel gemäss Fig. 4A, geschnitten in einer Ebene rechtwinklig zur Zeichenebene der Fig. 4A,

Fig. 4C eine Ansicht des freien Endes der Spindel mit der Zwinge zur Aufnahme der Schleifscheibe durch Drücken und elastische Verformung,

Fig. 5 eine Vorderansicht der Fig. 4A im Ausschnitt,

Fig. 6 einen Teil des Querschnittes gemäss der Schnittebene VI-VI der Fig. 4B,

Fig. 7 eine Variante einer Scheifscheibe, mit achsialer Oeffnung für die Nabenaufnahme in Sternform,

Fig. 8 einen Auschnitt aus einem Achsialschnitt einer Schleifscheibe, aufgesteckt am Ende einer Antriebsspindel gemäss dem Stande der Technik und entspechendem Vorstehen des freien Spindelendes über die Schleifebene der Schleifscheibe,

Fig. 9 einen Schnitt analog demjenigen gemäss Fig. 8 mit abgeplattetem verschwindendem Spindelende in einer ersten Ausführungsform,

Fig. 10a und 10b zwei unterschiedliche Ausführungsformen im Sinne der Fig. 9,

Fig. 11 eine weitere Ausführungsform eines Spindelendes mit abgeplattetem Ende und einer aufgepressten Schleifscheibe mit Nabe,

Fig. 12 einen Achsialschnitt durch die Scheifscheibe und ihre Nabe, in der Ausführung gemäss Fig. 11,

Fig. 13 eine Aufsicht auf die Schleifscheibe mit Nabe analog Fig. 12.

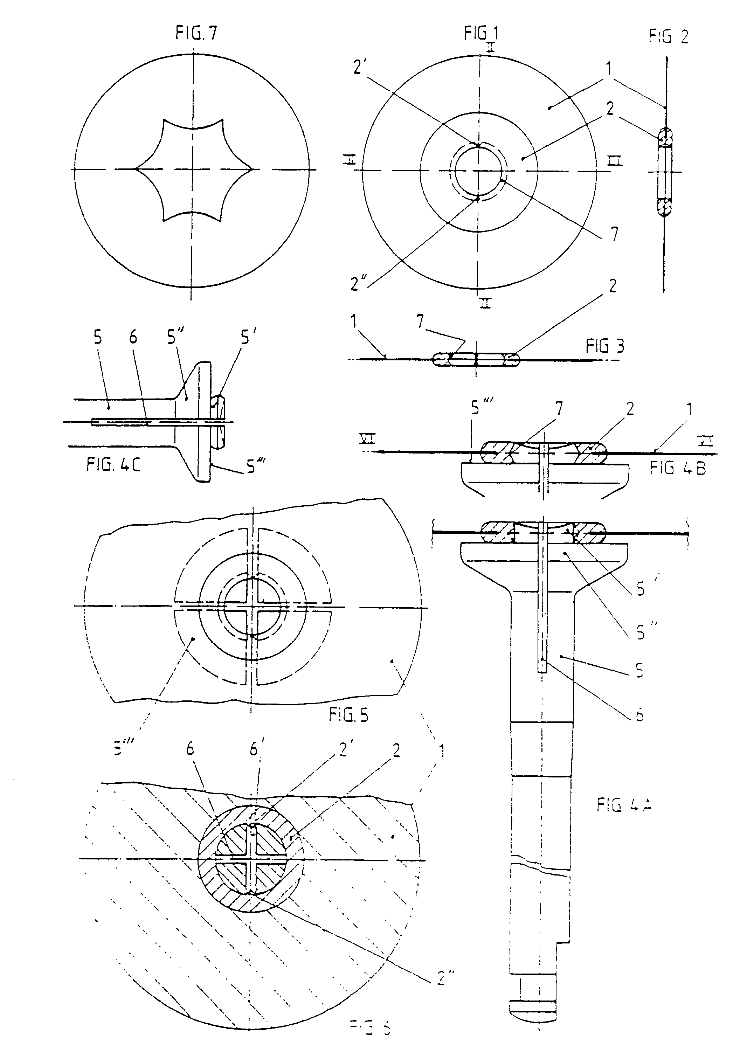

Gemäss den verschiedenen Fig. 1 bis 7 umfasst die Vorrichtung eine dünne Schleifscheibe 1, mit ihrer Nabe 2, welche beide vorzugsweise in Kunststoff gleicher oder unterschiedlicher Art, insbesondere Polyester, gepresst sind, sowie eine Antriebsspindel 5 aus Metall, z.B. Messing, rostfreiem Stahl oder auch aus flexiblem Hartkunststoff.

Das freie Ende der Spindel ist gemäss den Ebenen 6, 6' in eine Anzahl von Segmenten unterteilt, beispielsweise in zwei in rechtwinklig zueinander stehenden Ebenen, wie dies die Fig. zeigen, oder in drei um je 120° zueinander versetzten Ebenen.

Diese Nabe weist einen oder mehrere Vorsprünge 2', 2" auf, welche in die Einschnitte 6, 6' des freien Endes der Spindel vorstehen, um einen Schlupf der Scheine 1 bezüglich der Spindel 5 auch dann durch Formschluss zu Verhüten, wenn während des Schleifens und Polierens der Zähne infolge hohen Anpressdruckes ein grosser Widerstand entsteht.

Eine andere Massnahme ist in der Ausbildung der Zwinge 5' der Antriebsspindel 5 vorgesehen, welche nicht aus der Nabe 2 vorsteht, wie dies deutlich aus den Fig. 4A und 4B ersichtlich ist. Dies bewirkt, dass kein zusätzliches und merkliches Hindernis in den Zahnzwischenräumen geschaffen wird. Daher besteht die Möglichkeit, die Schleifscheibe auch zu Punkten zu führen, wo die Zahnzwischenräume sehr schmal sind, was mit bekannten Geräten nicht möglich ist.

Eine dritte Eigenheit dieser Vorrichtung besteht in der Verbreiterung 5" (Fig. 4A) des Antriebsspindelkopfes, um mit diesem eine ebene Auflagefläche 5''' zu schaffen, gegen welche die ebene Fläche der Nabe 2 der Schleifscheibe 1 zum Aufliegen kommt und damit deren völlig ebene Auflage sichert. Diese Fläche steht recht winklig zur Achse der Spindel 5, womit Schwingungen und Deformationen der Scheibe im Betrieb vermieden werden.

Auch die gewinkelte Form des Endes 5', z.B. doppelkegelstumpfförmig, der Spindel (Fig. 4C), welche sich in die komplementäre Nut 7 (Fig. 4B) der Nabe 2 einschiebt, sichert damit eine perfekte Ebenheit der Scheibe 2.

Um diese letzte Unannehmlichkeit zu verhüten, wird der Durchmesser der Zwinge (Fig. 4C) der Antriebsspindel etwas grösser oder gleich gross wie der Durchmesser der komplementären, konkaven Nut 7 der Nabe 2 gemacht.

Form und Art des Materials für die Teile vier Vorrichtung können unterschiedlich sein im Sinne der Kompatibilität mit den Ansprüchen.

Die beschriebene Schleifscheibe erlaubt insbesondere in enge und schlecht zugängliche Zwischenräume zwischen zwei zähnen aufgrund der speziellen Scheibenkonstruktion einzudrigen und trotzdem keine ungewollte Deformation der Scheibe wärend des Scheifvorganges befürchten zu müssen. Dieses Eindringen ist insbesondere auch dadurch bedingt, dass praktisch die Spindel nicht über die freie Fläche der Nabe vorsteht, was auch der Fall ist für die mit der Schleifscheibe durch ein Pressverfahren verbundene Nabe.

Die beschriebenen Schleifscheiben sind ausserordentlich dünn. Sie weisen eine Dicke von ca. 0,1 bis 0,5 mm auf und haben trotzdem einen relativ grossen Durchmesser, um in die versteckten Zahnlücken eindringen zu können.

Als Besonderheit hat sich auch die Verwendung von Polyester als Kunststoff für die Scheibennabe und zwar in der gummielastischen Form erwiesen, da damit nicht nur das Aufpressen auf den Schaft erleichtert, sondern auch schon in Ruhelage eine kraftschlüssige Verbindung zwischen dem antreibenden Schaft und der angetriebenen Scheine bzw. deren Nabe hergestellt wird. Dadurch wird die Möglichkeit sichergestellt, auch mit geringen Drehzahlen ein Stehenbleiben der Schleifscheibe bei laufendem Motor zu verhüten.

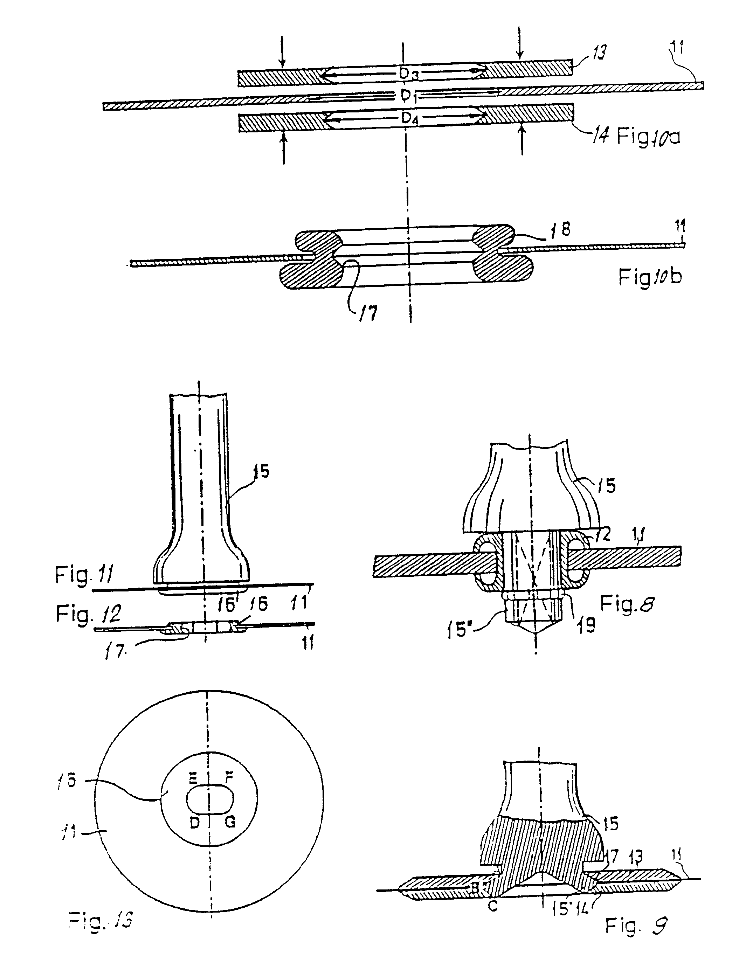

Fig. 8 zeigt die Scheibennane einer Schleifscheibe bekannter, gebräuchlicher Konstruction, welche am freien Ende der Spindel befestigt ist.

Die Scheibennabe besteht aus einem Metallring 12, welcher an seinen beiden Enden umgebogen ist und entsprechend aus der Schleifebene der Schleifscheibe 11 vorsteht, die normalerweise eine Dicke von 0,3 bis 0,5 mm aufweist.

Das Ende 15″ des unter elastischem Druck in die Scheibennabe 12 eingeschobenen Endes der Spindel 15, wobei beispielsweise eine elastische Spannung eines Ringleins 19 zu überwinden ist, steht daher aus der Scheibennabe 12 vor und bildet ein merkliches Hindernis, das ein Eindringen der Umfangsteile der Schleifscheibe 11 in enge Zwischenräume zwischen zwei Zähne verunmöglicht.

Im Sinne der vorliegenden Erfindung weist die Schleifscheibe 11 gemäss Fig. 9 eine sehr geringe Dicke auf, sowie eine Scheibennabe 13, 14, welche ausserordentlich flach ist, mit einer ringförmigen Kehlnut 17, die im Querschnitt ein Winkelprofil A, B, C aufweist oder halbkreisförmig ist oder auch von anderer Form sein kann.

Das Ende der Spindel 15, die sog. Zwinge 15′, weist eine zur ringförmigen Kehlnut 17 komplementäre Form auf und ist im speziellen gemäss der Form A, B, C winkelförmig, halbkreisförmig oder dergleichen Form ausgebildet, um ein minimales aus der Schleifebene der Schleifscheibe 11 vorstehendes Hindernis während des Schleifvorganges zu bilden.

Im Sinne der Fig. 13 kann die Kehlnut 17 auch gerade Teile aufweisen. Sie muss auch nicht kreisförmig sein. Diese Form ist vorgesehen, um eine Relativbewegung zwischen Schleifscheibe mit Nabe einerseits und Antriebsspindel 15 andererseits zu verhüten.

Die Scheibennabe 13, 14 gemäss Fig. 9 kann beispielsweise dadurch hergestellt werden, dass zwei achsial gebohrte, aus thermoplastischem Material, insbesondere Polyester, bestehende Scheiben 13 und 14 (Fig. 10a) mit Bohrungsdurchmessern $D_3$ und $D_4$, welche kleiner sind als der Durchmesser $D_1$ der Schleifscheibe 11, verwendet werden, wobei die obere Platte 13 und die untere Platte 14 sandwichartig die Schleifscheibe 11 halten und das Ganze in einer Presse (nicht dargestellt) gepresst wird, derart, dass in beschriebener Weise die Scheibennabe 13, 14 mit der ringförmigen Kehlnut 17 entsteht.

Eine andere Möglichkeit des Vorgehens ist dasjenige, bei welchem in die Bohrung der Schleifscheibe 11 ein gekehlter Ring 18 (Fig. 10b) aus thermoplastischem Material in die Presse eingebracht wird und das Ganze mittels Ultraschall verpresst wird, um damit die Scheibennabe gemäss Fig. 9 oder gemäss den Fig. 11 oder 12 zu erhalten.

Die Scheibennabe in der Schleifscheibe und diejenige der abgeplatteten Zwince 15′ der Spindel können bezüglich Form rund, dreieck-, mehreckig, oval, trapezförmig u. dgl. sein.

Diese Erfindung kann auch anderen Gebieten Anwendung finden, wo ein Schleifen in kleinen Zwischenräumen nötig ist, sei dies in der Metall-, Holz- oder Steinbearbeitungs-Branche oder der Uhrenindustrie bzw. im Juweliergeschäft.

## Ansprüche

1. Vorrichtung mit Spindel (5) und Schleifscheibe (1), insbesondere für Zahnärzte, bei welcher vorzugsweise das als Zwinge (5′) ausgebildete freie Spindelende radial geschlitzt (6, 6′) ist und eine Auflageebene (5″) für die Nabe (2) der Schleifscheibe (1) aufweist, wobei das aus der Auflageebene (5″) vorstehende freie Spindelende (5′) eine bombierte oder doppelkegel oder pyramiden stumpfmantelartige Peripheriefläge aufweist, dadurch gekennzeichnet, dass die Nabe (2) der Schleifscheibe (1) mit einer zur bombierten oder doppelkege oder pyramiden stumpfmantelartigen Peripheriefläge komplementären Nut (7) versehen ist und die Peripheriefläche des Spindelendes (5′) dazu bestimmt ist, bei auf die Auflageebene (5″) aufgepresster Schleifscheibennabe (2) in die Nut (7) der Schleifscheibe (1) einzudringen, um Spindel (5) und Scheibe (1) betriebsfähig miteinander zu verbinden und dass die Länge des freien Spindelendes (5') höchstens gleich der achsialen Länge der Nabe (2) der Schleifscheibe (1) ist, derart, dass das freie Spindelende (5') bei montierter Schleifscheibe (1) nicht über deren Nabe (2) vorsteht.

2. Vorrichtung nach Anspruch 1, dadurch gekennzeichnet, dass die Mantelfläche der Zwinge (5') der Spindel (5) gewinkelt ist und einen Durchmesser aufweist, welcher grösser oder höchstens gleich dem Durchmesser des Grundes der konkaven komplementären Nut (7) der Nabe der Schleifscheibe (1) ist. (Fig. 4C)

3. Vorrichtung nach einem der Ansprüche 1 oder 2, dadurch gekennzeichnet, dass der Bereich des freien Endes der Nabe der Schleifscheibe Vorsprünge (2', 2'') aufweist, um in Einschnitte (6, 6') der Zwinge der Spindel einzugreifen und dadurch ein Gleiten bzw. Schlüpfen der Nabe (2) bezüglich der Spindel zu verhüten.

4. Vorrichtung nach einem der Ansprüche 1 bis 3, dadurch gekennzeichnet, dass die Vorsprünge (2', 2'') dreieckförmig sind und sich bei gerader Anzahl paarweise gegenüberliegen.

5. Verfahren zum Herstellen der Schleifscheibe (1) der Vorrichtung nach einem der Ansprüche 1 bis 4, dadurch gekennzeichnet, dass man die Schleifscheibe (1) und deren Nabe (2) mit den Innenvorsprüngen (2', 2''), dazu vorgesehen, in die Einschnitte (6, 6') der Zwinge (5') der Spindel (5) einzudringen, durch Pressen aus Kunststoff, vorzugsweise Polyester gleicher oder unterschiedlicher Zusammensetzung, mit gummielastischen Eigenschaften der Nabe (2), herstellt.

6. Verfahren nach Anspruch 5, dadurch gekennzeichnet, dass man die Schleifscheibe (11) in Uebereinstimmung mit der Scheibennabe (13) gelocht zwischen eine Presse bringt, in welcher ein pressbares Material eingebracht wird, welches derart gepresst wird, dass es die Scheibennabe (13) begrenzt und im Innern dieser Nabe (13) eine Auskehlung presst, welche infolge elastischen Nachgebens der Scheibennabe (13) ein Aufpressen auf eine versteckte Zwinge (15') der Spindel (15) erlaubt.

7. Verfahren nach Anspruch 6, dadurch gekennzeichnet, dass man zusätzlich zur gelochten Schleifscheibe pressbares Material in Form zweier achsial gelochter Scheiben (13, 14) mit Lochdurchmessern (D$_3$, D$_4$) einlegt, welche kleiner sind als derjenige (D$_1$) der Schleifscheibe (11), wobei eine (13) der zwei Scheiben (13, 14) auf die eine Seite der Schleifscheibe (11) postiert wird und die andere Scheibe (14) auf der anderen Seite der Schleifscheibe, derart, dass während des Pressvorganges die beiden Scheiben (13, 14) sich zwischen sich und mit der Schleifscheibe (11) verbinden. (Fig. 9)

8. Verfahren nach Anspruch 6, Dadurch gekennzeichnet, dass man zusätzlich zur gelochten Schleifscheibe pressbares Material in Form eines vorgeformten, gekehlten Ringes (18) in die Presse einlegt.

## Claims

1. Device with a spindle (5) and grinding wheel (1), especially for dentists, wherein the free end of the spindle formed as a ferrule (5') is preferably radially slotted (6, 6') and has a support plane (5'') for the hub (2) of the grinding wheel (1), wherein the free spindle end (5') projecting from the support plane (5'') has a cambered, double-coned or pyramidal frusto-conical peripherical surface, characterised in that the hub (2) of the grinding wheel (1) is provided with a groove (7) complementary to the cambered, double-coned or pyramidal frusto-conical peripheral surface, and the peripheral surface of the spindle end (5') is adapted, when a grinding wheel hub (2) is pressed against the support plane (5''), to engage in the groove (7) in the grinding wheel (1) in order to join together operationally the spindle (5) and wheel (1), and in that the length of the free spindle end (5') is at most equal to the axial length of the hub (2) of the grinding wheel (1) in such manner that when the grinding wheel (1) is installed the free spindle end (5') does not project beyond the hub (2) thereof.

2. Device as in Claim 1, characterised in that the external surface of the ferrule (5') on the spindle is angled, and has a diameter greater than or at least equal to the diameter of the base of the concave complementary groove (7) in the hub of the grinding wheel (1) (Fig. 4C).

3. Device as in either of Claims 1 or 2, characterised in that the area of the free end of the grinding wheel hub has projections (2', 2'') for engaging in indents (6, 6') in the spindle ferrule and thus preventing sliding or slippage of the hub (2) relative to the spindle.

4. Device as in any of Claims 1-3, characterised in that the projections (2', 2'') are triangular and with an even number lie opposite each other in pairs.

5. Method of making the grinding wheel (1) for the device in any of Claims 1-4, characterised in that the grinding wheel (1) and its hub (2), with the inner projections (2', 2'') provided thereon for engaging the indents (6, 6') in the ferrule (5') of the spindle (5) are made by the pressing of plastic, preferably polyester of the same or different composition with rubbery elastic properties as the hub (2).

6. Method as in Claim 5, characterised in that the grinding wheel (11), apertured to match the wheel hub (13) is inserted in a press wherein a pressable material is held and is compressed in such manner that it surrounds the wheel hub (13) and presses into the interior of said hub (13) a recess which an elastic yielding of the wheel hub (13) permits pressing an to a concealed ferrule (15') of the spindle (15).

7. Method as in Claim 6, characterised in addition to the apertured grinding wheel pressable material is inserted in the form of two axially apertured discs (13, 14) whose aperture diameters ($D_3$, $D_4$) are smaller than that ($D_1$) of the grinding wheel, wherein one (13) of the two discs (13, 14) is positioned against one face of the grinding wheel (11) with the other disc (14) against the other face of the grinding wheel, in such manner that during pressing the two discs are bonded with each other and with the grinding wheel (11). (Fig.9).

8. Method as in Claim 6, characterised in that in addition to the apertured grinding wheel, pressable material in the form of a pre-shaped grooved ring (18) is inserted into the press.

## Revendications

1. Dispositif comportant une broche (5) et une meule (1), notamment pour les dentistes, dans lequel l'extrémité libre de la broche, conçue comme un embout (5'), est de préférence fendue radialement (6, 6') et présente un plan d'appui (5") pour le moyeu (2) de la meule (1), l'extrémité libre de broche (5') dépassant dudit plan d'appui (5") présentant une surface périphérique formant enveloppe bombée ou en forme de double tronc de cône ou de double tronc de pyramide, caractérisé en ce que le moyeu (2) de la meule (1) est pourvu d'une rainure (7) complémentaire de la surface périphérique formant enveloppe bombée ou en forme de double tronc de cône ou de double tronc de pyramide et la surface périphérique de l'extrémité de la broche (5') étant destinée à pénétrer dans la rainure (7) de la meule (1) lorsque le moyeu de meule (2) est engagé par pression sur le plan d'appui (5"), afin de relier la broche (5) et la meule (1) de manière fonctionnelle, et en ce que la longueur de l'extrémité de broche libre (5') est au maximum égale à la longueur axiale du moyeu (2) de la meule (1), de sorte que ladite extrémité de broche libre (5') ne dépasse pas du moyeu (2) de la meule (1) lorsque celle-ci est montée.

2. Dispositif selon la revendication 1, caractérisé en ce que la surface d'enveloppe de l'embout (5') de la broche (5) est angulaire et présente un diamètre supérieur ou à la rigueur égal au diamètre du fond de la rainure (7) complémentaire concave du moyeu de la meule (1) (fig. 4C).

3. Dispositif selon l'une quelconque des revendications 1 et 2, caractérisé en ce que la zone de l'extrémité libre du moyeu de la meule présente des parties saillantes (2', 2") afin de venir en prise dans des encoches (6, 6') de l'embout de la broche et d'empêcher ainsi un glissement, respectivement une dérive du moyeu (2) par rapport à la broche.

4. Dispositif selon l'une quelconque des revendications 1 à 3, caractérisé en ce que les parties saillantes (2', 2") ont une forme triangulaire et se font face par paires, en présence d'un nombre pair.

5. Procédé pour fabriquer la meule (1) du dispositif selon l'une quelconque des revendications 1 à 4, caractérisé en ce qu'on fabrique la meule (1) et son moyeu (2) comportant les parties saillantes internes (2', 2") destinées à pénétrer dans les encoches (6, 6') de l'embout (5') de la broche (5), par compression à partir de matière plastique, de préférence de polyester, de même composition ou de compositions différentes présentant les propriétés de gomme élastique du moyeu (2).

6. Procédé selon la revendication 5, caractérisé en ce que l'on met la meule (11), percée en conformité avec le moyeu (13) dans une presse dans laquelle est placé un matériau apte à subir une pression, qui est pressé de manière à délimiter le moyeu (13) et à former, par pressage, à l'intérieur dudit moyeu (13), une gorge qui permet d'engager par pression le moyeu (13), grâce à son fléchissement élastique, sur un embout caché (15') de la broche (15).

7. Procédé selon la revendication 6, caractérisé en ce qu'on place dans la presse, en plus de la meule percée, un matériau compressible ayant la forme de deux meules (13, 14) percées axialement et comportant des diamètres de perçages ($D_3$, $D_4$) inférieurs à celui ($D_1$) de la meule (11), l'une (13) des deux plaques (13, 14) étant placée sur une face de la meule (11) et la seconde plaque (14) étant placée sur l'autre face de la meule, de sorte que les deux plaques (13, 14) sont reliées entre elles et à la meule (11) pendant l'opération de pressage (fig. 9).

8. Procédé selon la revendication 6, caractérisé en ce qu'on place dans la presse, en plus de la meule percée, un matériau compressible ayant la forme d'un anneau (18) rainuré préformé.

FIG. 7

FIG 1

FIG 2

FIG 3

FIG 4C

FIG 4B

FIG 4A

FIG. 5

Fig 10a

Fig 10b

Fig. 11

Fig. 12

Fig. 8

Fig. 13

Fig. 9